# EUROPEAN PATENT SPECIFICATION

(11) **EP 3 644 708 B1**
(45) Date of publication and mention of the grant of the patent: **04.10.2023**
(21) Application number: 18737492.1
(22) Date of filing: 29.06.2018
(51) Int. Cl.: A01G 9/02, A01C 5/02, A01G 9/08, A01G 9/12, A01G 9/029

(54) **POT FOR GARDENING**
TOPF ZUM GÄRTNERN
POT DE JARDINAGE

(30) Priority: 30.06.2017 SE 1750857
(43) Date of publication of application: 06.05.2020
(73) Proprietor: Husqvarna AB, 561 82 Huskvarna (SE)
(72) Inventor: WETTELS, Heribert, 88471 Laupheim (DE); MAHLAU, Daniel, 81541 München (DE); SPLEIS, Judtih, 88471 Laupheim (DE)
(74) Representative: Finkele, Rolf
(86) International application number: PCT/EP2018/000330
(87) International publication number: WO 2019/001774

(56) References cited:
- GB-A- 2 220 118
- GB-A- 2 221 826
- GB-A- 2 265 291
- GB-A- 2 325 404
- GB-A- 2 506 340

## Description

### TECHNICAL FIELD

The present disclosure relates to a pot for gardening, and more particularly to the pot for planting a seed or a sapling therein.

### BACKGROUND

During small scale or indoor gardening practice such as balcony gardening and wall gardening, pots are employed for planting of seeds, samplings, or small plants therein. The pots provide a compact and movable alternative to lawn gardening in locations of limited space availability. Generally, materials required for gardening, such as the pot, soil, seeds, samplings, and so on may have to be purchased separately. Further, some gardening skills may be required by a user in order to correctly plant the seeds and/or the saplings in the pot. This may also require use of physical effort, dedicated gardening tools, and knowledge to use them.

State of the art gardening pots are known from GB 2 265 291 A, GB 2 221 826 A, GB 2 220 118 A and GB 2 325 404 A.

In many situations, the user may lack desired skills to use the gardening tools in an appropriate way. Also, time and physical effort required for such gardening methods may result in poor gardening practice, poor garden conditions, and/or poor maintenance thereof. Further, timely replacement of soil, introduction of manure, planting/replanting of seeds/saplings, soil spread, water spillage, and so on especially in limited indoor spaces may in turn result in disorderly conditions. Hence, there is a need for an improved method of gardening by providing improved gardening equipment.

### SUMMARY

In view of the above, it is an objective of the present invention to solve or at least reduce the drawbacks discussed above. The objective is at least partially achieved by a pot for gardening, according to an embodiment of the present invention. The pot includes a base and a plurality of walls. Each of the plurality of walls connects and extends away from the base. Each of the plurality of walls is interconnected with respect to one another. The base and the plurality of walls define an internal space therein. The internal space is adapted to receive soil therein. The pot also includes at least one placeholder provided within the internal space. The at least one placeholder is removably coupled to at least one of the base and at least one of the plurality of walls. The removability of the placeholder with respect to the pot provides flexibility to a user to employ the placeholder within the pot as per requirement. The at least one placeholder is adapted to provide a pre-dug hole within the soil. The pre-dug hole is adapted to receive at least one of a seed and a sapling therein. The pre-dug hole provides to reduce time required in order to plant the seed and/or the sapling in the soil without use of a specialized digging tool and/or digging effort. The at least one of the base and the at least one of the plurality of walls includes a tab extending therefrom. The tab is adapted to removably couple the at least one placeholder thereon. The tab provides a simple and convenient method of coupling the placeholder within the pot as per requirement without use of a specialized tool.

According to an embodiment not according to the present invention, the at least one placeholder is integrally formed with respect to at least one of the base and at least one of the plurality of walls. Accordingly, the pre-dug holes may be formed by the placeholder readily and easily in situations when the pot may have to be emptied and refilled with a new quantity of the soil.

According to an embodiment of the present invention, the at least one placeholder is removably affixed to the tab via an interference fit. The interference fit provides the user ease of coupling the placeholder within the pot without use of the specialized tool.

According to an embodiment of the present invention, the at least one placeholder is removably coupled to the tab via a bayonet connection. The bayonet connection provides the user ease of coupling the placeholder within the pot without use of the specialized tool.

According to an embodiment of the present invention, the at least one placeholder is inclined to a normal axis defined by the base. The inclination improves utilization of limited space available within the internal space of the pot.

According to an embodiment of the present invention, the at least one placeholder is a seed capsule. In a situation when the internal space within the pot and around the placeholder may be filled with the soil, the user may have to simply break open the already present seed capsule for the seeds therein to be implanted in the pre-dug holes of the soil. As such, the user may have to simply regularly water the soil for the sampling to grow.

According to an embodiment of the present invention, the at least one placeholder is manufactured using a dissolvable material. As such, the placeholder may break open automatically and may release the seeds and/or manure in to the pre-dug holes when a required condition may be met, such as presence of required amount of moisture in the soil, temperature of the soil, and so on for the placeholder to dissolve.

According to an embodiment of the present invention, the at least one placeholder is a tube. The tube provides a simple, convenient, and space efficient method to create the pre-dug hole within the soil. Also, a tube being a relatively generic form of design, the user may replace the existing placeholder with any other available tube as per choice in case of damage or loss of the existing placeholder.

According to an embodiment of the present invention, the at least one placeholder includes a plurality of placeholders. Each of the plurality of placeholders is provided spaced apart with respect to one another. The plurality of placeholders provides to improve space utilization of the limited space available within the internal space of the pot for planting multiple seeds and/or saplings.

According to an embodiment of the present invention, the plurality of placeholders is interconnected with respect to one another. As such, each of the plurality of placeholders may be coupled within the pot through a single placeholder.

According to an embodiment of the present invention, a lid is removably coupled to at least one of the plurality of walls. The lid is adapted to, at least partially, enclose the internal space in association with the base and the plurality of walls. The lid provides protection to the soil against external elements, weather, and so on. Also, the lid may provide vertical stacking of additional pots one over another in order to improve space utilization.

According to the present invention, at least one of the plurality of walls includes a protruding surface provided thereon. The protruding surface extends away from the internal space. The protruding surface is adapted to provide an extended opening in to the internal space. The extended opening provides ease of access in to the internal space especially when the lid may be placed over pot.

According to an embodiment of the present invention, the lid includes a depression provided along an edge thereof in association with the extended opening. The depression provides ease of access in to the internal space of the pot in association with the extending opening when the lid may be placed over the pot.

According to an embodiment of the present invention, the at least one placeholder extends up to the extended opening. Accordingly, the pre-dug hole may be inclined towards the extended opening in order to provide a path for the sapling to grow out of the internal space.

According to an embodiment of the present invention, a plurality of pots is provided. Each of the plurality of pots is interconnected with respect to one another. The interconnection provides ease of stacking of the plurality of pots in turn improving utilization of space during use of multiple pots.

According to an embodiment of the present invention, at least one of the plurality of walls of each of the plurality of pots is interconnected with respect to any one of the plurality of walls of an adjacent pot. As such, the interconnection provides ease of assembly, improved aesthetics, and improved space utilization during use of the multiple pots in a horizontal stacking arrangement.

According to an embodiment of the present invention, the lid of at least one of the plurality of pots is interconnected with respect to the base of an adjacent pot. As such, the interconnection provides ease of assembly, improved aesthetics, and improved space utilization during use of the multiple pots in a vertical stacking arrangement.

According to an embodiment of the present invention, the lid of at least one of the plurality of pots is interconnected with respect to the lid of an adjacent pot. As such, the interconnection provides ease of assembly/disassembly of multiple lids associated with the multiple pots in turn providing time efficient assembly/disassembly process.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of an exemplary pot having a plurality of placeholders therein, not in accordance with the present invention;
**FIG. 2** shows a cross sectional view of the pot of **FIG. 1** along,a section **A-A',** not in accordance with the present invention;
**FIG. 3** shows a cross sectional view of another exemplary placeholder disposed within the pot of **FIG. 1****,** not in accordance the present invention;
**FIG. 4** shows a perspective view of another exemplary pot having a placeholder and a lid, in accordance with an embodiment of the present invention;
**FIG. 5** shows a perspective view of a plurality of pots stacked horizontally with respect to one another, in accordance with an embodiment of the present invention;
**FIG. 6** shows a perspective view of a plurality of pots stacked vertically with respect to one another, in accordance with an embodiment of the present invention;
**FIGS. 7A-7B** show perspective views of the exemplary placeholders of **FIGS. 1** and **3****,** in accordance with an embodiment of the present invention, and **FIG. 8** shows a perspective view of another exemplary pot having another exemplary placeholder therein, not in accordance with the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "substantially", "normal", "actual", "plurality", "single", multiple', "similar", "within", "inner", "outer", "between", "approximately", "equal", "overall", "limit", "without", or the like, merely describe the configuration shown in the Figures. Indeed, the components may be oriented in any direction and the terminology, therefore, should be understood as encompassing such variations unless specified otherwise.

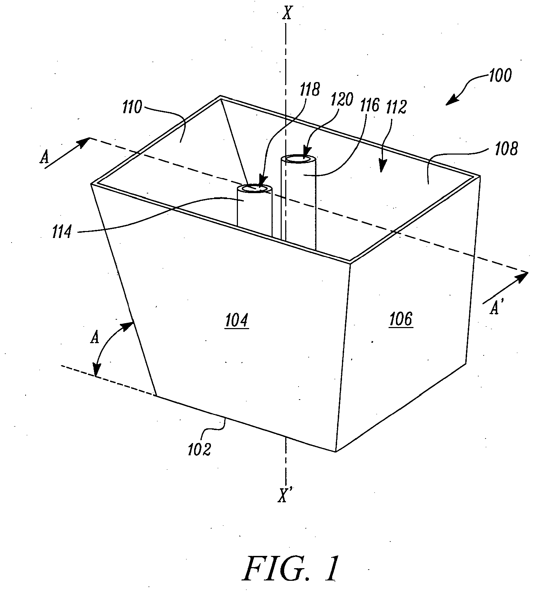

Referring to **FIG. 1****,** a perspective view of an exemplary pot **100** is illustrated. The pot **100** includes a substantially bowl shaped configuration. More specifically, the pot **100** includes a base **102.** The base **102** defines a normal axis **X-X'** thereof. The pot **100** also includes a plurality of walls **104, 106, 108, 110** connecting and extending away from the base **102.** In the illustrated embodiments, the plurality of walls **104, 106, 108, 110** includes four walls. Each of the plurality of walls **104, 106, 108, 110** is connected to and extends from the base **102** at an angle **"A".** The actual value of the angle **"A"** may vary based on application requirements.

In the illustrated embodiment, the angle **"A"** defined by each of the plurality of walls **104, 106, 108, 110** with respect to the base **102** is similar. In other embodiments, the angle **"A"** defined by one or more of the plurality of walls **104, 106, 108, 110** with respect to the base **102** may vary. Each of the plurality of walls **104, 106, 108, 110** is interconnected with respect to one another. As such, the wall **104** is connected with respect to the wall **106,** the wall **106** is connected with respect to the wall **108,** the wall **108** is connected with respect to the wall **110,** and the wall **110** is connected with respect to the wall **104.** Accordingly, the pot **100** has a substantially rectangular and conical configuration.

In other embodiments, the plurality of walls **104, 106, 108, 110** may include any number of walls based on application requirements. Accordingly, the pot **100** may have any other configuration known in the art, such as a triangular configuration, a pentagonal configuration, and so on. In some embodiments, the pot **100** may include a single wall (not shown) having a circular configuration. In such a situation, the pot **100** may include a substantially cylindrical configuration. The pot **100** may be made of any material known in the art such as a metal, a polymer, wood, and/or a combination thereof, and so on. Also, the pot **100** may be manufactured using any known method, such as casting, molding, fabrication, additive manufacturing, and so on.

The pot **100** includes a substantially hollow configuration. More specifically, the base **102** in association with the plurality of walls **104, 106, 108**, **110** defines an internal space **112** therein. The internal space **112** is adapted to receive soil (not shown) therein. Also, the internal space **112** may receive other material required for planting one or more seeds (not shown) or saplings (not shown) therein, such as sand, manure, pellets, pebbles, rocks, water, and so on.

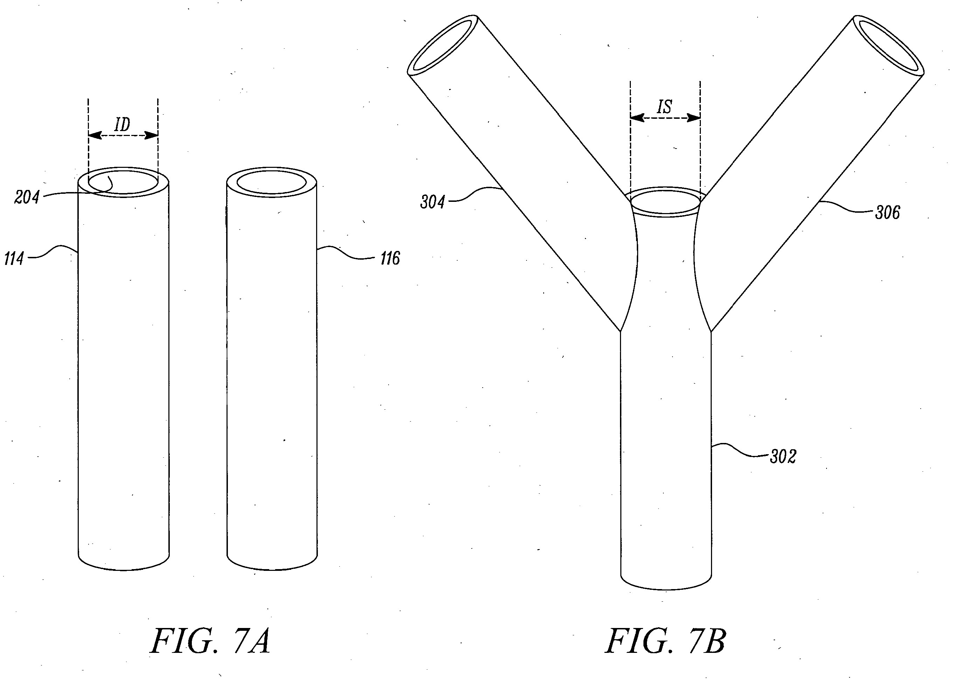

Additionally, the internal space **112** is adapted to receive a plurality of placeholders **114, 116** therein (also shown in **FIG. 7A**). In the illustrated embodiment, the internal space **112** includes two placeholders provided therein. In other embodiments, the internal space **112** may include a single or multiple placeholders therein based on application requirements. Each of the plurality of placeholders **114, 116** is provided spaced apart with respect to one another within the internal space **112.**

In the illustrated embodiment, each of the plurality of placeholders **114, 116** is provided perpendicular to the base **102** and parallel to the normal axis **X-X'.** In other embodiments, one or more of the plurality of placeholders **114, 116** may be provided inclined to the base **102** or the normal axis **X-X'** at an angle (not shown). Each of the plurality of placeholders **114, 116** is adapted to provide a pre-dug hole **118, 120** within the soil respectively when being removed from the pot 100. After the placeholder 114 is removed from the pot, the soil is left with a pre-dug hole or cavity therein. The pre-dug holes **118, 120** are adapted to receive at least one of the seed and the sapling therein.

More specifically, in a situation when the internal space **112** is filled with the soil, each of the plurality of placeholders **114, 116** is placed within the soil in a manner such that the soil surrounds each of the plurality of placeholders **114, 116** in order to form the pre-dug holes **118, 120** respectively. During planting of the seed or the sapling, one or more of the plurality of placeholders **114, 116** is removed in order to provide a hollow space in the form of the pre-dug holes **118, 120** within the soil respectively. The pre-dug holes **118, 120** may then be used for planting the seed or the sapling in the soil without use of any digging tool and/or digging effort.

In the illustrated embodiment, each of the plurality of placeholders **114, 116** is an open ended tube having a cylindrical configuration. In other embodiments, one or more of the plurality of placeholders **114, 116** may have any other configuration, such as a rectangular configuration, a triangular configuration, and so on. In other embodiments, one or more of the plurality of placeholders **114, 116** may be a closed ended tube. In such a situation, the plurality of placeholders **114, 116** may limit unwanted entry of soil within the hollow space of the pre-dug holes **118, 120** during filling of the internal space **112** of the pot **100** with the soil. The plurality of placeholders **114, 116** may be made of any material known in the art, such as a polymer, a metal, wood, and/or a combination thereof, and so on. Also, the plurality of placeholders **114, 116** may be manufactured using any known method, such as casting, molding, fabrication, additive manufacturing, and so on.

In some embodiments, one or more of the plurality of placeholders **114, 116** may be a seed capsule. In such a situation, the seed capsule may include a substantially elongated configuration. Also, the seed capsule may be made of a dissolvable material, such as a biodegradable material, a water soluble material, and so on. Accordingly, as the seed capsule may dissolve in the soil, one or more seeds and/or manure present therein may be released from the seed capsule within the pre-dug holes **118, 120** in the soil respectively.

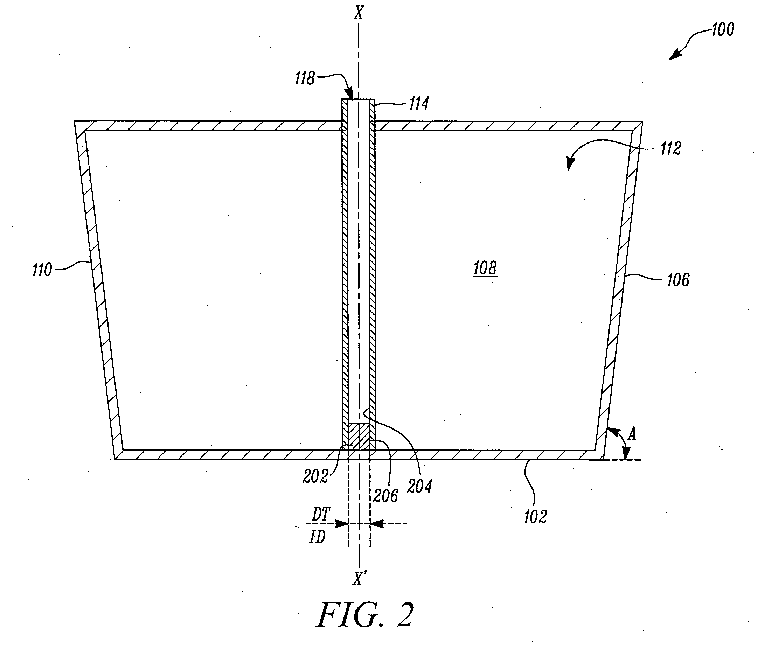

Referring to **FIG. 2****,** a cross sectional view of the pot **100** along a section **A-A'** (shown in **FIG. 1**) is illustrated. A connection between one or more of the plurality of placeholders **114, 116** and the base **102** will now be explained with reference to the placeholder **114.** It should be noted that other placeholder **116** of the plurality of placeholders **114, 116** may also be coupled to the base **102** using a similar method.

The pot **100** includes a tab **202** provided on the base **102.** More specifically, the tab **202** extends away from the base **102** in to the internal space **112** of the pot **100.** A configuration of the tab **202** is substantially similar to a configuration of the placeholder **114.** Accordingly, the tab **202** defines a diameter **"DT"** thereof approximately equal to an inner diameter **"ID"** of the placeholder **114.** As a result, the placeholder **114** may be removably coupled with respect to the tab **202** using an interference fit between an inner surface **204** of the placeholder **114** and an outer surface **206** of the tab **202.**

The tab **202** provides positional stability to the placeholder **114.** The placeholder **114** may withstand lateral forces through support of the tab **202.** The placeholder **114** may not get displaced from intended position based on support of the tab **202.** This may further help in providing the pre-dug hole in a vertically linear orientation. Such an orientation may further help in easily dropping the seed or sapling through to bottom of the pot **100.**

In other embodiments (not shown), the tab **202** may include a ring shaped configuration having a hollow configuration. In such a situation, an inner diameter of the tab **202** may be approximately equal to an outer diameter of the placeholder **114.** As a result, the placeholder **114** may be removably coupled with respect to the tab **202** using an interference fit between an outer surface of the placeholder **114** and an inner surface of the tab **202.** In other embodiments, one or more of the plurality of placeholders **114, 116** may be removably coupled to the tab **202** using any other fastening method known in the art, such as a clip connection, clamping, thread coupling, bolting, adhesion, and so on.

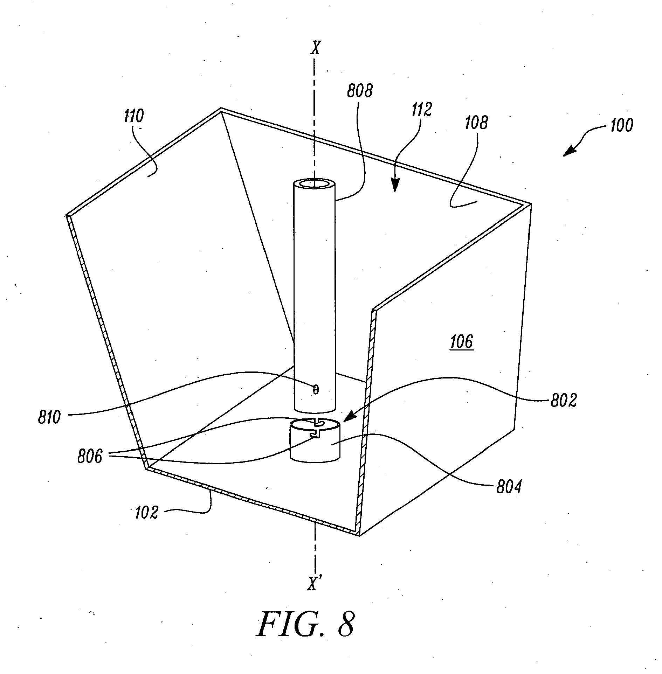

In some embodiments, referring to **FIG. 8****,** the placeholder **808** may be removably coupled within the internal space **112** of the pot **100** using a bayonet connection **802.** The placeholder 808 may be coupled to the pot 100 in any other suitable manner as well, and the present disclosure is not limited by type of connection between the pot 100 and the placeholder 808. In such a situation, the tab **804** may include one or more recesses **806** provided thereon. Also, the placeholder **808** may include one or more protrusions **810** provided thereon. Accordingly, the protrusion **810** may be received in the recess **806** and the placeholder **808** may be adequately rotated about the normal axis **X-X'** in order to removably couple the placeholder **808** with respect to the tab **804.** It should be noted that, in other embodiments, the recess **806** and the protrusion **810** may be interchangeably provided on the placeholder **808** and the tab **804** respectively.

In an exemplary situation, the placeholder **808** may be placed inside the pot **100** in a removably coupled manner. Then, a seed/sapling may be potted therein. After adequate growth of the seed/sapling, the plant may need to be shifted to another location. The placeholder **808** may then be removed from the pot **100** and contents of the pot **100** such as soil, manure etc. may be thoroughly emptied. Removable coupling of the placeholder **808** with the pot **100** allows reusability of the pot **100.** The pot **100** may be used again and again in an efficient manner.

In yet some embodiments, one or more of the plurality of placeholders **114, 116** may be removably coupled to any one of the plurality of walls **104, 106, 108, 110.** In such a situation, the tab **202** may be provided on one or more of the plurality of walls **104, 106, 108, 110**. Alternatively, in some embodiments not according to the invention, one or more of the plurality of placeholders **114, 116** may be integrally formed with respect to the base **102** or one or more of the plurality of walls **104, 106, 108, 110,** such as during manufacturing thereof. In yet other embodiments, one or more of the plurality of placeholders **114, 116** may be simply placed within the internal space **112** without any contact with the base **102** and/or any of the plurality of walls **104, 106, 108, 110.** In such a situation, one or more of the plurality of placeholders **114, 116** may be supported by the soil itself within the internal space **112.**

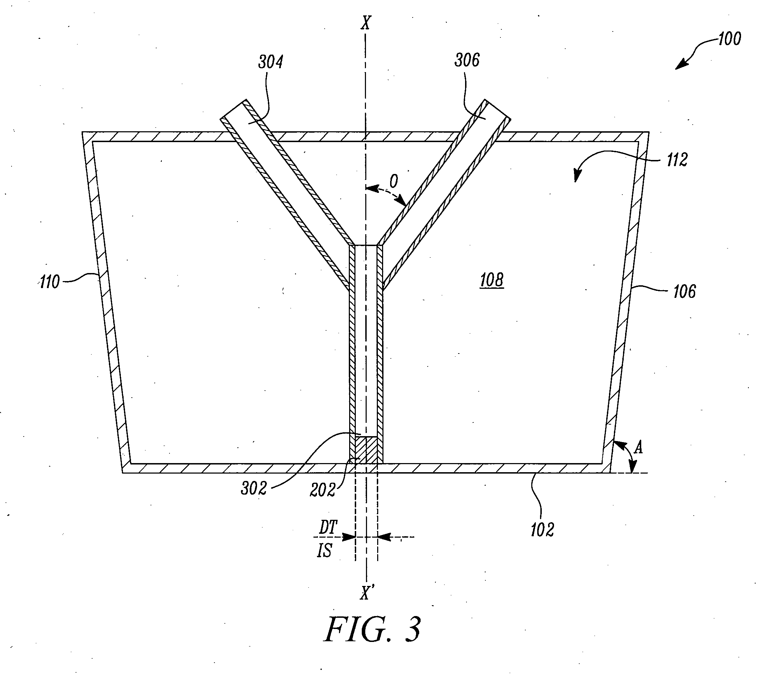

In some embodiments, each of the plurality of placeholders **114, 116** may be interconnected with respect to one another. For example, referring to **FIGS. 3** and **7B****,** the plurality of placeholders **304, 306** may include a branched configuration in a manner such that each of the plurality of placeholders **304,** 306 may be interconnected with respect to one another through a stem **302.** The stem **302** may be further connected to the tab **202** for connecting the plurality of placeholders **304, 306** with respect to the base **102** or any of the plurality of walls **104, 106, 108, 110.**

In such a situation, the diameter **"DT"** of the tab **202** may be approximately equal to the inner diameter **"IS"** of the stem **302** for providing the interference fit therebetween. In the illustrated embodiment, each of the plurality of placeholders **304, 306** is inclined at angle **"O"** with respect to the normal axis **X-X'** or the stem **302.** In other embodiments, one or more of the plurality of placeholders **304, 306** may be parallel or inclined at any angle with respect to the normal axis **X-X'.**

Referring to **FIGS. 1****,** **2****,** **3****,** **7A,** and **7B****, it** should be noted that one or more of the plurality of placeholders **114, 116, 304, 306** described herein may be a separate component with respect to the pot **100.** More specifically, in some embodiments; one or more of the plurality of placeholders **114, 116, 304, 306** may be individually and separately provided without the pot **100.** In other embodiments, one or more of the plurality of placeholders **114, 116, 304, 306,** and the pot **100** may be provided as a single package.

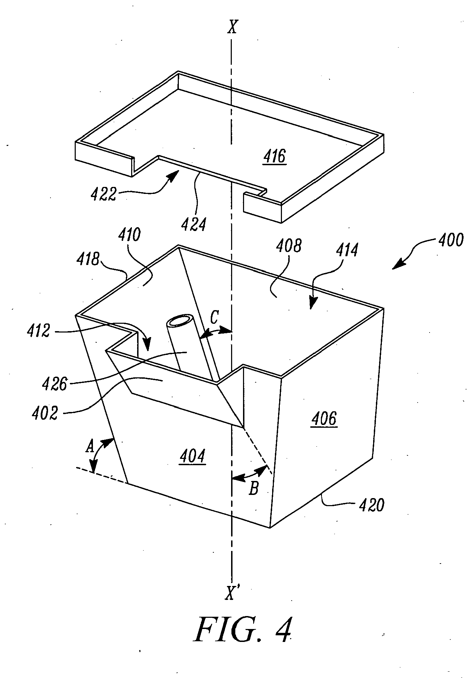

Referring to **FIG. 4****,** a perspective view of another embodiment of the pot **400** is illustrated. The pot **400** includes a protruding surface **402** provided on one or more of the plurality of walls **404, 406, 408, 410.** In the illustrated embodiment, the protruding surface **402** is provided on the wall **404.** The protruding surface **402** defines an angle **"B"** with respect to the normal axis **X-X'.** The protruding surface **402** is adapted to provide an extended opening **412** in to the internal space **414** of the pot **400.** In other embodiments, multiple protruding surfaces (not shown) similar to the protruding surface **402** may be provided on any of the remaining plurality of walls **406, 408, 410.** The multiple protruding surfaces may provide multiple extended openings in to internal space **414** of the pot **400.**

Further, the pot **400** includes a lid **416.** The lid **416** is adapted to be removably affixed to one or more of the plurality of walls **404, 406, 408, 410.** More specifically, the lid **416** is adapted to be removably affixed to a top edge **418** of the pot **400.** Accordingly, the lid **416** has a configuration similar to a configuration of the top edge **418** of the pot **400.** In the illustrated embodiment, the lid **416** includes a rectangular configuration and may vary based on application requirements. The lid **416** is adapted to, at least partially, enclose the internal space **414** in association with the base **420** and the plurality of walls **404, 406, 408, 410.**

The lid **416** includes a depression **422** provided along an edge **424** thereof. The depression **422** is provided in association with the extended opening **412.** Accordingly, the depression **422** provides to increase an overall size of the extended opening **412.** In other embodiments, the lid **416** may include multiple depressions (not shown) provided along the edge **424** thereof in association with the multiple protruding surfaces provided on the remaining plurality of walls **406, 408, 410.** The lid **416** may be made of any material known in the art, such as a metal, a polymer, wood, and/or a combination thereof, and so on. Also, the lid **416** may be manufactured using any known method, such as casting, molding, fabrication, additive manufacturing, and so on.

The extended opening **412** provides a path for the sampling to grow and extend out of the internal space **414.** The extended opening **412** also provides access to a user within the internal space **414** without disassembling the lid **416** with respect to the pot **400.** The extended opening **412** also provides access to sun, water, air, and so on in to the internal space **414** without disassembling the lid **416** with respect to the pot **400**.

In such a situation, the placeholder **426** is provided within the internal space **414** inclined at an angle **"C"** with respect to the normal axis **X-X'.** Accordingly, the placeholder **426** may extend from the internal space **414** up to or outside the extended opening **412** based on application requirements. In a situation, when the pot **400** may include multiple extended openings, one or more placeholders (not shown) may be provided within the internal space **414** and extending up to or outside the one or more multiple extended openings respectively.

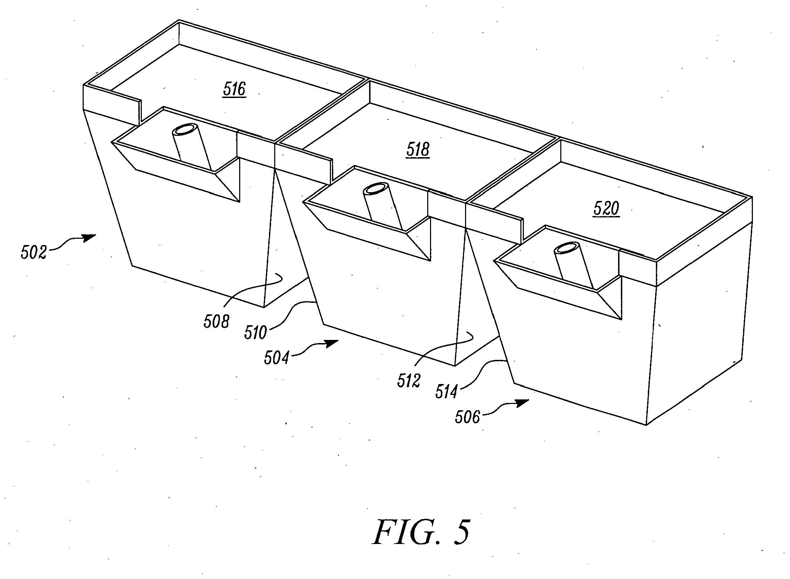

Referring to **FIG. 5****,** a plurality of pots **502, 504, 506** is illustrated. Each of the plurality of pots **502, 504, 506** is interconnected with respect to one another. More specifically, in the illustrated embodiment, the plurality of pots **502, 504, 506** includes three pots. In other embodiments, the plurality of pots **502, 504, 506** may include multiple pots based on application requirements. Also, one or more of the plurality of walls **508, 510, 512, 514** of each of the plurality of pots **502, 504, 506** is interconnected with respect to any one of the plurality of walls **508, 510, 512, 514** of an adjacent pot respectively.

For example, the wall **508** of the pot **502** is connected with respect to the wall **510** of the pot **504.** Further, the wall **512** of the pot **504** is connected with respect to the wall **514** of the pot **506,** and so on in order to provide a horizontal array of the plurality of pots **502, 504, 506.** Additionally, the plurality of pots **502, 504, 506** may include an additional array of pots (not shown) similar to the plurality of pots **502, 504, 506.** In such a situation, any of the remaining walls of the plurality of pots **502, 504, 506** may be connected with respect to adjacent walls of the additional array of pots respectively.

Additionally or optionally, the plurality of pots **502, 504, 506** includes a plurality of lids **516, 518, 520** respectively. The number of lids may vary based on the number of the plurality of pots. Each of the plurality of lids **516, 518, 520** is interconnected with respect to one another. For example, the lid **516** is connected with respect to the lid **518.** The lid **518** is connected with respect to the lid **520,** and so on. Further, when the plurality of pots **502, 504, 506** may include the additional array of pots, the plurality of lids **516, 518, 520** of the plurality of pots **502, 504, 506** may be connected with respect to adjacent lids (not shown) of the additional array of pots respectively.

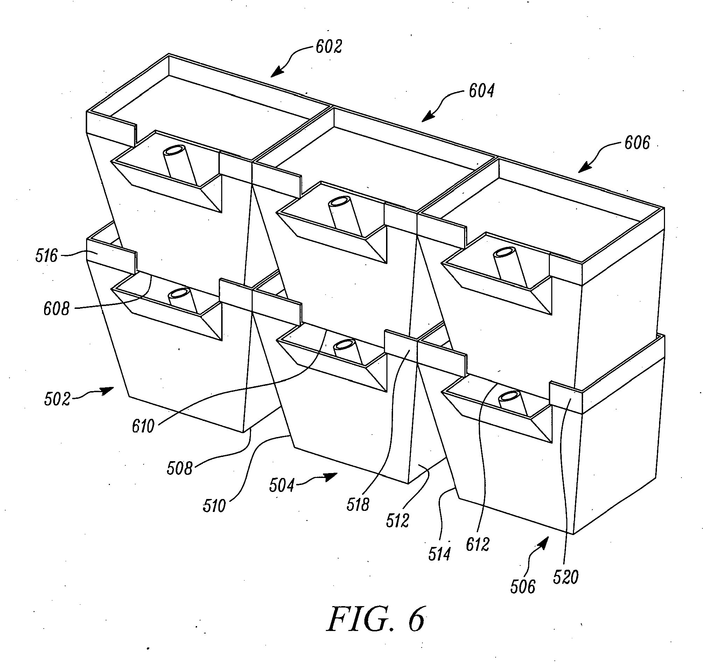

In another embodiment, referring to **FIG. 6****,** an additional array of pots **602, 604, 606** is vertically stacked over the plurality of pots **502, 504, 506**. The additional array of pots **602, 604, 606** may include a similar configuration as a configuration of the plurality of pots **502, 504, 506** respectively. More specifically, each of the plurality of lids **516, 518, 520** of the plurality of pots **502, 504, 506** is interconnected with a base **608, 610, 612** of an adjacent pot of the additional array of pots **602, 604, 606** respectively. For example, the base **608** of the pot **602** rests over the lid **516** of the pot **502.** Similarly, the base **610** of the pot **604** rests over the lid **518** of the pot **504.** Also, the base **612** of the pot **606** rests over the lid **520** of the pot **506.** Accordingly, any number of additional arrays of pots similar to the additional array of pots **602, 604, 606** may be stacked one over another to form a vertically stacked arrangement.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Pot
- **102**: Base
- **104**: Wall
- **106**: Wall
- **108**: Wall
- **110**: Wall
- **112**: Internal Space
- **114**: Placeholder
- **116**: Placeholder
- **118**: Pre-Dug Hole
- **120**: Pre-Dug Hole
- **202**: Tab
- **204**: Inner Surface of Placeholder
- **206**: Outer Surface of Tab
- **302**: Stem
- **304**: Placeholder
- **306**: Placeholder
- **400**: Pot
- **402**: Protruding Surface
- **404**: Wall
- **406**: Wall
- **408**: Wall
- **410**: Wall
- **412**: Extended Opening
- **414**: Internal Space
- **416**: Lid
- **418**: Top Edge
- **420**: Base
- **422**: Depression
- **424**: Edge
- **426**: Placeholder
- **502**: Pot
- **504**: Pot
- **506**: Pot
- **508**: Wall
- **510**: Wall
- **512**: Wall
- **514**: Wall
- **516**: Lid
- **518**: Lid
- **520**: Lid
- **602**: Pot
- **604**: Pot
- **606**: Pot
- **608**: Base
- **610**: Base
- **612**: Base
- **802**: Bayonet Connection
- **804**: Tab
- **806**: Recess
- **808**: Placeholder.
- **810**: Protrusion
- **X-X'**: Normal Axis
- **A-A'**: Section
- **A**: Angle
- **B**: Angle
- **C**: Angle
- **O**: Angle
- **DT**: Diameter of Tab
- **ID**: Inner Diameter of Placeholder
- **IS**: Inner Diameter of Stem

## Claims

1. A pot (**100**) comprising:
a base (**102**),
a plurality of walls (**104, 106, 108, 110**) connecting and extending away from the base (**102**), each of the plurality of walls (**104, 106, 108, 110**) interconnected with respect to one another, wherein the base (**102**) and the plurality of walls (**104, 106, 108, 110**) define an internal space (**112**) therein, the internal space (**112**) adapted to receive soil therein,
at least one placeholder (**114, 116**) provided within the internal space (**112**), the at least one placeholder (**114, 116**) removably coupled to the base (**102**) or at least one of the plurality of walls (**104, 106, 108, 110**), the at least one placeholder (**114, 116**) adapted to provide a pre-dug hole (**118, 120**) within the soil when being removed from the pot (100), the pre-dug hole (**118, 120**) adapted to receive at least one of a seed and a sapling therein, and
the base (**102**) or the at least one of the plurality of walls (**104, 106, 108, 110**) includes a tab (**202**) extending therefrom, the tab (**202**) adapted to removably couple the at least one placeholder (**114, 116**) thereon;
**characterized in that:**
at least one of the plurality of walls (**404, 406, 408, 410**) includes a protruding surface (**402**) provided thereon, the protruding surface (**402**) extending away from the internal space (**414**), the protruding surface (**402**) adapted to provide an extended opening (**412**) in to the internal space (**414**)

2. The pot (**100**) of claim 1, wherein the at least one placeholder (**808**) is removably coupled to the tab (**804**) via a bayonet connection (**802**).

3. The pot (**400**) of claims 1 and 2, wherein the at least one placeholder (**426**) is inclined to a normal axis defined by the base (**420**).

4. The pot (**100**) of claims 1 to 3, wherein the at least one placeholder (**114, 116**) is a seed capsule.

5. The pot (**100**) of claims 1 to 4, wherein the at least one placeholder (**114, 116**) is manufactured using a dissolvable material.

6. The pot (**100**) of claims 1 to 5, wherein the at least one placeholder (**114, 116**) includes a plurality of placeholders (**114, 116**), each of the plurality of placeholders (**114, 116**) provided spaced apart with respect to one another.

7. The pot (**400**) of claims 1 to 6 further comprising a lid (**416**) removably coupled to the at least one of the plurality of walls (**404, 406, 408, 410**), the lid (**416**) adapted to, at least partially, enclose the internal space (**414**) in association with the base (**420**) and the plurality of walls (**404, 406, 408, 410**).

8. The pot (**400**) of claim 7, wherein the lid (**416**) includes a depression (**422**) provided along an edge (**424**) thereof in association with the extended opening (**412**).

9. The pot (**100**) of claims 1 to 8 further comprising a plurality of pots (**502**, **504, 506**), each of the plurality of pots (**502, 504, 506**) interconnected with respect to one another.

10. The pot (**100**) of claim 9, wherein at least one of the plurality of walls (**508, 510, 512, 514**) of each of the plurality of pots (**502, 504, 506**) is interconnected with respect to any one of the plurality of walls (**508, 510, 512, 514**) of an adjacent pot (**502, 504, 506**).

11. The pot (**100**) of claims 7 and 10, wherein the lid (**516, 518, 520**) of at least one of the plurality of pots (**502, 504, 506**) is interconnected with respect to the base (**608, 610, 612**) of an adjacent pot (**602, 604, 606**).

12. The pot (**100**) of claims 7 and 10, wherein the lid (**516, 518, 520**) of at least one of the plurality of pots (**502, 504, 506**) is interconnected with respect to the lid (**516, 518, 520**) of an adjacent pot (**502, 504, 506**).

## Patentansprüche

1. Topf (100) aufweisend:
eine Basis (102),
eine Vielzahl von Wänden (104, 106, 108, 110), die die Basis (102) verbinden und sich von ihr weg erstrecken, wobei jede der Vielzahl von Wänden (104, 106, 108, 110) miteinander verbunden ist, wobei die Basis (102) und die Vielzahl von Wänden (104, 106, 108, 110) einen Innenraum (112) in sich definieren, wobei der Innenraum (112) geeignet ist, Erde darin aufzunehmen,
zumindest einen Platzhalter (114, 116), der innerhalb des Innenraums (112) vorgesehen ist, wobei der zumindest eine Platzhalter (114, 116) abnehmbar mit der Basis (102) oder zumindest einer der Vielzahl von Wänden (104, 106, 108, 110) gekoppelt ist, wobei der zumindest eine Platzhalter (114, 116) angepasst ist, um ein vorgefertigtes Loch (118, 120) innerhalb des Bodens bereitzustellen, wenn er aus dem Topf (100) entfernt wird, wobei das vorgefertigte Loch (118, 120) angepasst ist, um zumindest einen Samen oder einen Setzling darin aufzunehmen, und
die Basis (102) oder zumindest eine der Vielzahl von Wänden (104, 106, 108, 110) eine sich davon erstreckende Lasche (202) aufweist, wobei die Lasche (202) geeignet ist, den zumindest einen Platzhalter (114, 116) abnehmbar daran zu koppeln;
**dadurch gekennzeichnet, dass**:
zumindest eine der Vielzahl von Wänden (404, 406, 408, 410) eine darauf angeordnete vorstehende Fläche (402) aufweist, wobei sich die vorstehende Fläche (402) von dem Innenraum (414) weg erstreckt, wobei die vorstehende Fläche (402) dazu geeignet ist, eine erweiterte Öffnung (412) in den Innenraum (414) hinein bereitzustellen.

2. Topf (100) nach Anspruch 1, wobei der zumindest eine Platzhalter (808) über eine Bajonettverbindung (802) abnehmbar mit der Lasche (804) verbunden ist.

3. Topf (400) nach Anspruch 1 und 2, wobei der zumindest eine Platzhalter (426) zu einer durch die Basis (420) definierten Normalachse geneigt ist.

4. Topf (100) nach einem der Ansprüche 1 bis 3, wobei der zumindest eine Platzhalter (114, 116) eine Samenkapsel ist.

5. Topf (100) nach einem der Ansprüche 1 bis 4, wobei der zumindest eine Platzhalter (114, 116) aus einem auflösbaren Material hergestellt ist.

6. Topf (100) nach einem der Ansprüche 1 bis 5, wobei der zumindest eine Platzhalter (114, 116) eine Vielzahl von Platzhaltern (114, 116) umfasst, wobei jeder der Vielzahl von Platzhaltern (114, 116) mit Abstand zueinander vorgesehen ist.

7. Topf (400) nach einem der Ansprüche 1 bis 6, ferner aufweisend einen Deckel (416), der abnehmbar mit zumindest einer der Vielzahl von Wänden (404, 406, 408, 410) verbunden ist, wobei der Deckel (416) geeignet ist, den Innenraum (414) in Verbindung mit der Basis (420) und der Vielzahl von Wänden (404, 406, 408, 410) zumindest teilweise zu umschließen.

8. Topf (400) nach Anspruch 7, wobei der Deckel (416) eine Vertiefung (422) aufweist, die entlang einer Kante (424) des Deckels in Verbindung mit der erweiterten Öffnung (412) vorgesehen ist.

9. Topf (100) nach einem der Ansprüche 1 bis 8, ferner aufweisend eine Vielzahl von Töpfen (502, 504, 506), wobei jeder der Vielzahl von Töpfen (502, 504, 506) miteinander verbunden ist.

10. Topf (100) nach Anspruch 9, wobei zumindest eine der Vielzahl von Wänden (508, 510, 512, 514) jedes der mehreren Töpfe (502, 504, 506) in Bezug auf eine der Vielzahl von Wänden (508, 510, 512, 514) eines benachbarten Topfes (502, 504, 506) miteinander verbunden ist.

11. Topf (100) nach Anspruch 7 und 10, wobei der Deckel (516, 518, 520) zumindest eines der mehreren Töpfe (502, 504, 506) in Bezug auf die Basis (608, 610, 612) eines benachbarten Topfes (602, 604, 606) miteinander verbunden ist.

12. Topf (100) nach Anspruch 7 und 10, wobei der Deckel (516, 518, 520) zumindest eines der mehreren Töpfe (502, 504, 506) in Bezug auf den Deckel (516, 518, 520) eines benachbarten Topfes (502, 504, 506) miteinander verbunden ist.

## Revendications

1. Pot (100) comprenant :
- une base (102),
une pluralité de parois (104, 106, 108, 110) reliant et s'étendant en s'éloignant de la base (102), chacune de la pluralité de parois (104, 106, 108, 110) étant interconnectée l'une par rapport à l'autre, dans lequel la base (102) et la pluralité de parois (104, 106, 108, 110) définissant un espace interne (112) à l'intérieur, l'espace interne (112) étant adapté pour recevoir de la terre à l'intérieur,
au moins un porte-empreinte (114, 116) disposé dans l'espace interne (112), l'au moins un porte-empreinte (114, 116) étant couplé de manière amovible à la base (102) ou à au moins une de la pluralité de parois (104, 106, 108, 110), l'au moins un porte-empreinte (114, 116) étant adapté pour fournir un trou pré-creusé (118, 120) dans le sol lorsqu'il est retiré du pot (100), le trou pré-creusé (118, 120) étant adapté pour recevoir au moins un parmi une graine et un jeune arbre à l'intérieur, et
la base (102) ou l'au moins une de la pluralité de parois (104, 106, 108, 110) comprend une languette (202) qui s'étend à partir de celle-ci, la languette (202) étant adaptée pour coupler de manière amovible l'au moins un porte-empreinte (114, 116) sur celle-ci ; **caractérisé en ce que** :
au moins une de la pluralité de parois (404, 406, 408, 410) comprend une surface saillante (402) disposée dessus, la surface saillante (402) s'étendant en s'éloignant de l'espace interne (414), la surface saillante (402) étant adaptée pour fournir une ouverture étendue (412) dans l'espace interne (414).

2. Pot (100) selon la revendication 1, dans lequel l'au moins un porte-empreinte (808) est couplé de manière amovible à la languette (804) via une connexion à baïonnette (802).

3. Pot (400) selon les revendications 1 et 2, dans lequel l'au moins un porte-empreinte (426) est incliné par rapport à un axe normal défini par la base (420).

4. Pot (100) selon les revendications 1 à 3, dans lequel l'au moins un porte-empreinte (114, 116) est une capsule de semences.

5. Pot (100) selon les revendications 1 à 4, dans lequel l'au moins un porte-empreinte (114, 116) est fabriqué en utilisant un matériau pouvant être dissous.

6. Pot (100) selon les revendications 1 à 5, dans lequel l'au moins un porte-empreinte (114, 116) comprend une pluralité de porte-empreintes (114, 116), chacun de la pluralité de porte-empreintes (114, 116) étant disposé espacé l'un par rapport à l'autre.

7. Pot (400) selon les revendications 1 à 6, comprenant en outre un couvercle (416) couplé de manière amovible à l'au moins une de la pluralité de parois (404, 406, 408, 410), le couvercle (416) étant adapté pour fermer au moins partiellement l'espace interne (414) en association avec la base (420) et la pluralité de parois (404, 406, 408, 410).

8. Pot (400) selon la revendication 7, dans lequel le couvercle (416) comprend une dépression (422) prévue le long d'un bord (424) de celui-ci en association avec l'ouverture étendue (412).

9. Pot (100) selon les revendications 1 à 8, comprenant en outre une pluralité de pots (502, 504, 506), chacun de la pluralité de pots (502, 504, 506) étant interconnecté l'un par rapport à l'autre.

10. Pot (100) de la revendication 9, dans lequel au moins une de la pluralité de parois (508, 510, 512, 514) de chacun de la pluralité de pots (502, 504, 506) est interconnectée par rapport à l'une quelconque de la pluralité de parois (508, 510, 512, 514) d'un pot adjacent (502, 504, 506).

11. Pot (100) selon les revendications 7 et 10, dans lequel le couvercle (516, 518, 520) d'au moins un de la pluralité de pots (502, 504, 506) est interconnecté par rapport à la base (608, 610, 612) d'un pot adjacent (602, 604, 606).

12. Pot (100) selon les revendications 7 et 10, dans lequel le couvercle (516, 518, 520) d'au moins un de la pluralité de pots (502, 504, 506) est interconnecté par rapport au couvercle (516, 518, 520) d'un pot adjacent (502, 504, 506).
